# EUROPÄISCHE PATENTSCHRIFT

(11) **EP 1 601 552 B1**
(45) Veröffentlichungstag und Bekanntmachung des Hinweises auf die Patenterteilung: **20.08.2008**
(21) Anmeldenummer: 04719373.5
(22) Anmeldetag: 11.03.2004
(51) Int. Cl.: B60Q 1/12

(54) **SYSTEM ZUR ANSTEUERUNG EINER FAHRZEUGBELEUCHTUNGSEINRICHTUNG**
SYSTEM FOR CONTROLLING A VEHICLE LIGHTING UNIT
SYSTEME POUR COMMANDER UN DISPOSITIF D'ECLAIRAGE DE VEHICULE

(30) Priorität: 13.03.2003 DE 10310905
(43) Veröffentlichungstag der Anmeldung: 07.12.2005
(73) Patentinhaber: Hella KGaA Hueck & Co., 59552 Lippstadt (DE)
(72) Erfinder: PFINGSTEN, Maik, 59555 Lippstadt (DE); SEUSS, Jürgen, 59505 Bad Sassendorf (DE)
(86) Internationale Anmeldenummer: PCT/EP2004/002477
(87) Internationale Veröffentlichungsnummer: WO 2004/080758

(56) Entgegenhaltungen:
- EP-A- 1 142 758
- EP-A- 1 195 293
- EP-A- 1 375 250
- DE-A- 19 803 002
- US-A1- 2002 163 794

## Beschreibung

Die Erfindung bezieht sich auf ein System zur Ansteuerung einer Fahrzeugbeleuchtungseinrichtung mit einem Mittel zum Verschwenken des von der Beleuchtungseinrichtung ausgeleuchteten Bereichs relativ zur einer Referenzrichtung (Fahrzeuglängsrichtung), einem Mittel zur Bestimmung des Lenkradwinkels bzw. des Radlenkwinkels und mit einem Fahrgeschwindigkeitssensor. Dabei erfolgt die Bestimmung des Sollwertes für den Schwenkwinkel des Verschwenkmittels in Abhängigkeit vom Radlenkwinkel. Ein solches System wird auch als dynamisches Kurvenlicht bezeichnet, da es dynamisch den Lenkbewegungen der Räder folgt.

Ein derartiges System ist aus der EP 1 157 888 A2 bekannt. Dort ist der Sollwert für den Schwenkwinkel gleich dem Radlenkwinkel multipliziert mit einem geschwindigkeitsabhängigen Verstärkungsfaktor. Problematisch bei einem solchen System ist, daß auch geringfügige, kurzzeitige Schwankungen des Lenkradwinkels ("Zittern um die Null-Lage"), die auch bei höheren Fahrgeschwindigkeiten zwangsläufig immer vorhanden sind, zu einem unruhigen Hin- und Herschwenken der von der Beleuchtungseinrichtung erzeugten Lichtverteilung führt. Dies wird vom Fahrer selbst und auch vom Gegenverkehr als irritierend und störend empfunden.

Das Dokument EP 1 375 250 A2 gehört zum Stand der Technik nach Artikel 54 (3) EPÜ und gilt für die Vertragsstaaten DE, GB und FR. In dem Dokument ist ein System zur Ansteuerung einer Fahrzeugbeleuchtungseinrichtung offenbart mit einem Mittel zum Verschwenken des von der Beleuchtungseinrichtung ausgeleuchteten Bereichs relativ zu einer Referenzrichtung mit einem Mittel zur Bestimmung des Radlenkwinkels mit einem Paar Geschwindigkeitssensor, wobei der Sollwert für den Schwenkwinkel in Abhängigkeit vom Radlenkwinkel bestimmt wird, wobei der Sollwert für den Schwenkwinkel in Abhängigkeit von der Fahrgeschwindigkeit bestimmt wird und wobei eine Glättungseinheit zur zeitlichen Glättung des Radlenkwinkelsignals vorgesehen ist, die Glättung in Abhängigkeit von der Fahrgeschwindigkeit erfolgt, der Sollwert für den Schwenkwinkel in Abhängigkeit vom geglätteten Drahtlenkwinkelsignal bestimmt wird.

Nachteilig erweist sich hierbei, dass keine geschwindigkeitsabhängige Glättung durchgeführt wird und bei starken Lenkbewegungen keine schnelle und unmittelbare Schwenkreaktion der Lichtverteilung erfolgt.

Aufgabe der Erfindung ist es daher, ein System zu schaffen, das die vorstehend beschriebene Problematik beseitigt.

Diese Aufgabe wird erfindungsgemäß durch die Merkmale der Anspruch 1 gelöst. Es ist vorteilhaft, daß das Radlenkwinkelsignal als das Basissignal zur Bestimmung des Sollwerts für den Schwenkwinkel in einer Glättungseinheit (Filter) zeitlich geglättet wird. Auf diese Weise kann erreicht werden, daß das System bei höheren Geschwindigkeiten träger auf Lenkeinflüsse reagiert, so daß ein unruhiges Hin- und Herschwenken der von der Beleuchtungseinrichtung erzeugten Lichtverteilung vermieden wird. Die so erzielte, bei hohen Geschwindigkeiten vorteilhafte Trägheit des Systems, die bei hohen Geschwindigkeiten die gewünschte Stabilität der Lichtverteilungslage gegenüber kurzeitig schwankenden Lenkeinflüssen bewirkt, wird andererseits bei niedrigen Geschwindigkeiten (z.B. bei Abbiegemanövern in Wohngebieten) als nachteilig empfunden, da der Fahrer hier eine schnelle und unmittelbare Schwenkreaktion der Lichtverteilung auf die von ihm durchgeführten Lenkbewegungen erwartet. Um diesen Anforderungen gerecht zu werden, erfolgt die Glättung des Radlenkwinkelsignals erfindungsgemäß zusätzlich geschwindigkeitsabhängig, wobei das Ausmaß der Glättung bei höheren Geschwindigkeiten im Vergleich zu niedrigeren Geschwindigkeiten größer ist.

Das Radlenkwinkelsignal als dem eigentlichen Basissignal für die Bestimmung des Schwenkwinkelsollwertes kann auf verschiedene Weise ermittelt werden, zum Beispiel über einen Lenkwinkelsensor, der den Lenkradwinkel ermittelt, wobei der Radlenkwinkel in einem definierten, im wesentlichen linearen Übersetzungsverhältnis zum Lenkwinkel steht. In diesem Fall wird das Radlenkwinkelsignal durch Multiplikation des Lenkwinkelsignals mit einem Übersetzungsfaktor ermittelt. Das Radlenkwinkelsignal kann jedoch auch unmittelbar über einen Radlenkwinkelsensor ermittelt werden.

Bei der konstruktiven Ausbildung der Beleuchtungseinrichtung sowie dem Mittel zum Verschwenken der von der Beleuchtungseinrichtung erzeugten Lichtverteilung kommen sämtliche dem Fachmann bekannte Varianten in Verbindung mit der Erfindung in Frage.

Anhand der beigefügten Zeichnungen soll die Erfindung nachfolgend veranschaulicht und näher beschrieben werden. Es zeigt:
- Figur 1: eine Blockschaltbild des erfindungsgemäßen Systems,
- Figur 2: ein Blockschaltbild der Glättungseinheit,
- Figur 3: den geschwindigkeitsabhängigen Verlauf der Filterzeitkonstanten,
- Figur 4: das zeitlich unterschiedliche Schwenkverhalten bei der Einfahrt und der Ausfahrt in eine Kurve,
- Figur 5: den geschwindigkeitsabhängigen Verlauf des Verstärkungsfaktors,
- Figur 6: A einen Zeitverlauf für das Radlenkwinkelsignal,
- Figur 6B: das geglättete und verstärkte Schwenkwinkelsignal bei 80km/h als Antwort auf den zeitlichen Verlauf des Radlenkwinkelsignals,
- Figur 6C: die Schwenkwinkelgeschwindigkeit (1. zeitliche Ableitung des Schwenkwinkels) bei Aktivierung einer Filterzeitkonstanten von 0,7 Sekunden,
- Figur 6D: die Schwenkwinkelgeschwindigkeit (1. zeitliche Ableitung des Schwenkwinkels) bei Aktivierung einer Filterzeitkonstanten von Null (ungedämpft).

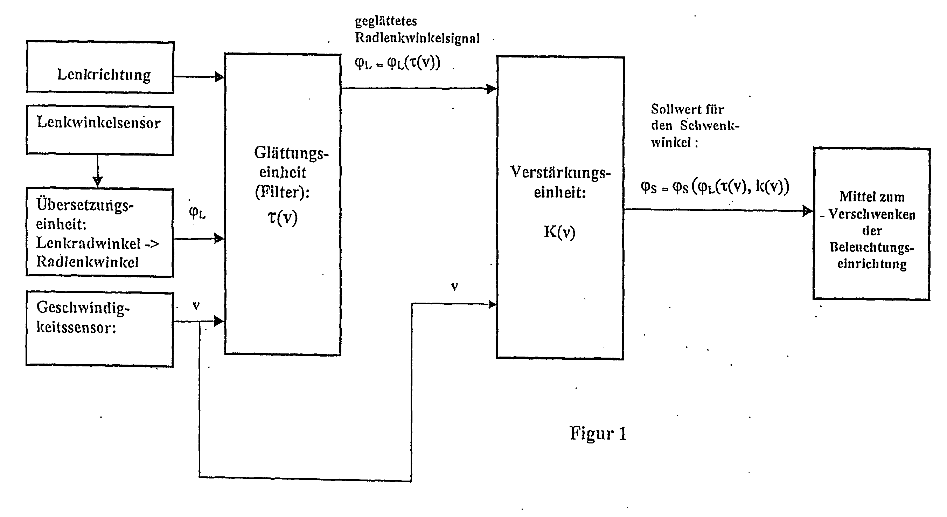

In Figur 1 ist ein Blockschaltbild des erfindungsgemäßen Systems dargestellt. Dort wird das Radlenkwinkelsignal ϕ_{L} aus dem Lenkwinkelsignal mithilfe des Übersetzungsverhältnisses ermittelt. Das Radlenkwinkelsignal ϕ_{L} wird nun einer Glättungseinheit zugeführt, der als weitere Eingangsgröße die Fahrgeschwindigkeit v zugeführt wird. Die Glättungseinheit, die auch als zeitliches Signalfilter bezeichnet werden kann, wird im wesentlichen durch die Fitterzeitkonstante τ bestimmt. In der Glättungseinheit erfolgt nun eine zeitliche Glättung des Radlenkwinkelsignal ϕ_{L} , die zudem noch geschwindigkeitsabhängig ist. Dabei wird die Geschwindigkeitsabhängigkeit vorzugsweise durch eine geschwindigkeitsabhängige Filterzeitkonstante τ (v) realisiert. Damit lässt sich das geglättete Radlenkwinkelsignal ϕ_{L} wie folgt ausdrücken: ϕ_{L} = ϕ_{L}(τ(v)).

Das geglättete Radlenkwinkelsignal ϕ_{L} = ϕ_{L}(τ(v)) wird nun anschließend noch einer Verstärkungseinheit zugeführt. Dort wird das geglättete Radlenkwinkelsignal noch zusätzlich verstärkt, wobei der Verstärkungsfaktor **k** ebenfalls geschwindigkeitsabhängig ist: **k = k(v).**
Der Sollwert für den Schwenkwinkel ϕₛ entspricht dann dem geglätteten und verstärkten Radlenkwinkelsignal, was vorzugsweise durch folgenden funktionellen Zusammenhang ausgedrückt wird: ϕₛ = ϕ_{L}**(τ(v)) x k(v).**

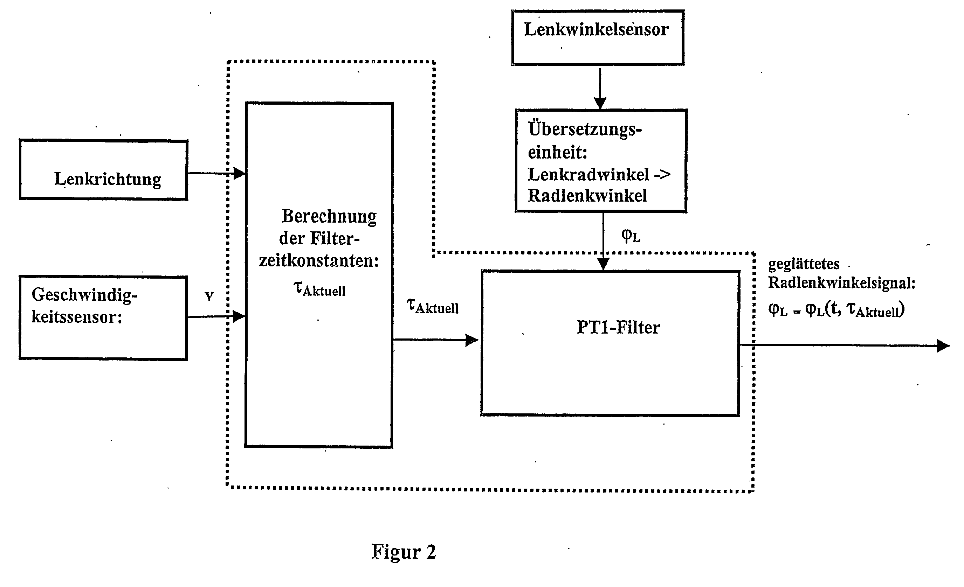

In Figur 2 ist ein Blockschaltbild der Glättungseinheit dargestellt. Die Glättungseinheit besteht wiederum aus zwei Einheiten, nämlich einer ersten Einheit zur geschwindigkeitsabhängigen Berechnung der Filterzeitkonstanten und dem eigentlichen Filter, wobei die jeweils aktuelle Filterzeitkonstante dem eigentlichen Filter zugeführt wird, wo die Glättung entsprechend der aktuellen Filterzeitkonstanten durchgeführt wird.
Dabei ist der Filter in der dargestellten Ausführungsform als computerimplementierter Filteralgorithmus realisiert, vorzugsweise in Form eines Proportional-Zeit-Filters, der dem Fachmann unter PT1-Filter geläufig ist. In einer weiteren Ausführungsform wird der Filter durch eine elektrische Filterschaltung (nicht dargestellt) realisiert, dessen Zeitkonstante zum Beispiel ein RC-Glied ist.

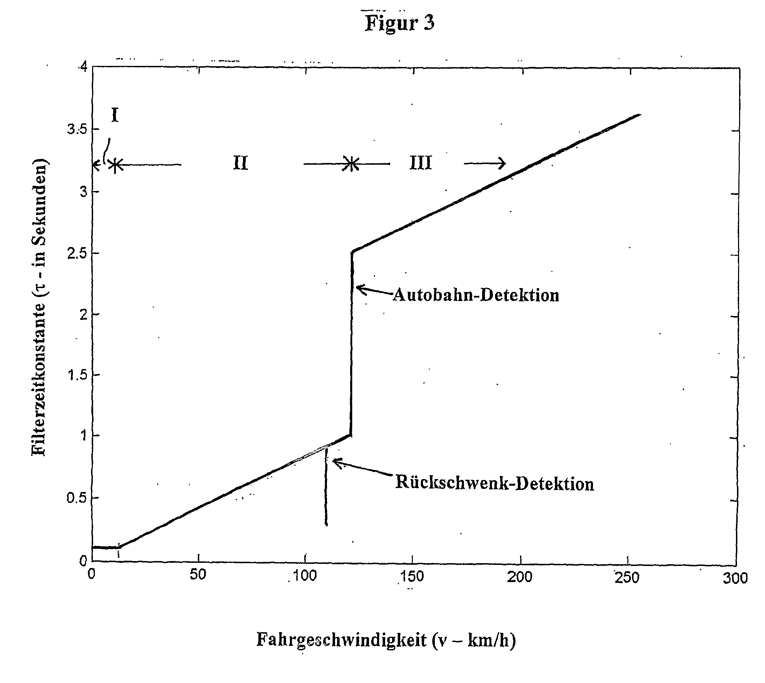

In Figur 3 ist der geschwindigkeitsabhängige Verlauf der Filterzeitkonstanten dargestellt. Es sind drei Geschwindigkeitsbereiche vorgesehen:
I. Bereich: v ≤ 10km/h
II. Bereich: 10km/h > v ≥ 130km/h
III. Bereich: v > 130km/h.
Die vorstehend genannten Geschwindigkeitswerte sind lediglich als beispielhafte Richtwerte zu verstehen.

Im ersten Bereich der kleinen Geschwindigkeiten, die typisch für Einpark-, Rangier-und Abbiegesituationen an Kreuzungen (90°-Kurven) sind, ist die Filterzeitkonstante konstant und relativ klein. In diesen Situationen, in denen der Fahrer starke Lenkbewegungen ausführt, erwartet er eine schnelle und unmittelbare Schwenkreaktion der Lichtverteilung auf die von ihm durchgeführten Lenkbewegungen.

Im zweiten Bereich bei höheren Geschwindigkeiten werden die vorstehend beschriebenen Einpark-, Rangier- und Abbiegemanöver, die mit sehr starken Lenkbewegungen einhergehen, nicht mehr durchgeführt. In diesem Geschwindigkeitsbereich werden weniger starke Lenkbewegungen durchgeführt, da ein Fahrzeug in diesem Bereich im wesentlichen nur dem Kurvenverlauf der Fahrbahn folgt. Dabei besteht in diesem Geschwindigkeitsbereich im Vergleich zum ersten Bereich ein Großteil aus Geradeausfahrt. Allerdings bewirken insbesondere bei Geradeausfahrt geringfügige, kurzzeitige Schwankungen des Lenkradwinkels, die zwangsläufig immer vorhanden sind, ein als störend und irritierend empfundenes unruhiges Hin- und Herschwenken der von der Beleuchtungseinrichtung erzeugten Lichtverteilung. Dabei werden aufgrund der Reichweite der Lichtverteilung, z.B. beim Abblendlicht, bereits kleinste Schwenkwinkelauslenkungen deutlich wahrgenommen. Zur Glättung dieser störenden Schwenkwinkelschwankungen ist in diesem Geschwindigkeitsbereich im Unterschied zum ersten Bereich eine vorzugsweise linear mit der Geschwindigkeit ansteigende Filterzeitkonstante vorgesehen.

Beim Überschreiten einer Grenzgeschwindigkeit von z.B. 130km/h erfolgt vorzugsweise ein sprunghafter Anstieg der Filterzeitkonstanten. Dies kann zum Beispiel durch Addition eines Wertes erfolgen. Jenseits dieser Grenzgeschwindigkeit steigt die Filterzeitkonstante dann wiederum linear mit der Geschwindigkeit. Durch den sprunghaften Anstieg der Filterzeitkonstanten bei Überschreitung der Grenzgeschwindigkeit wird insbesondere eine erhöhte Stabilität bei Fahrten auf Autobahnen bewirkt.

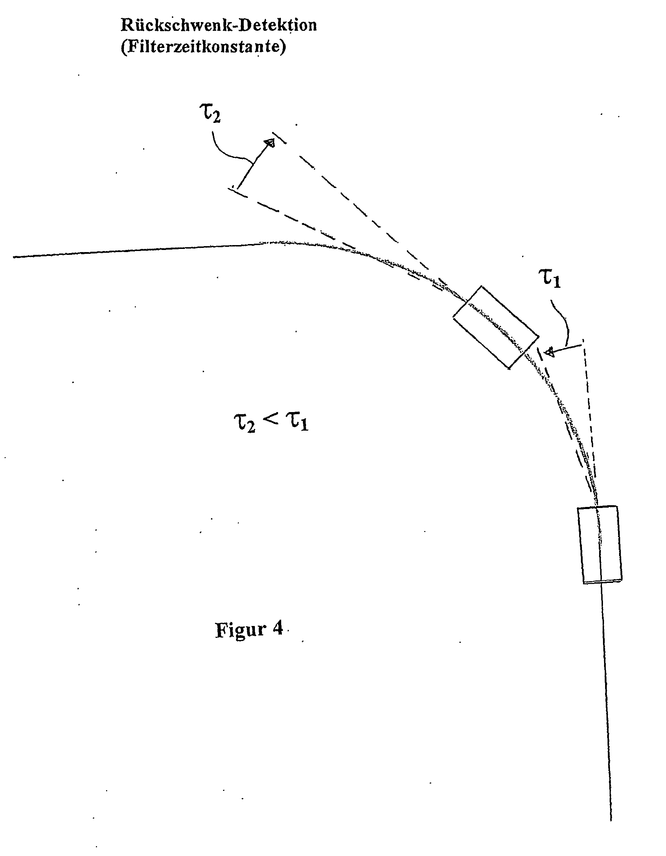

Eine weitere vorteilhafte Ausgestaltung der Erfindung besteht darin, daß die Filterzeitkonstante nicht nur in Abhängigkeit von der Fahrgeschwindigkeit, sondern zusätzlich auch in Abhängigkeit von der Lenkrichtung bestimmt wird. Dabei wird unter Lenkrichtung verstanden, ob der Lenkwinkel von der Geradeausstellung (Nullgradstellung) als Referenzposition beim Einschwenken in eine Kurve hin zu größeren Winkel geändert wird oder umgekehrt beim Rückschwenken in Richtung auf die Referenzposition kleiner wird. Erfindungsgemäß wird nun die Filterzeitkonstante beim Rückschwenken sprunghaft erniedrigt (siehe Figur 3). Damit wird dem Umstand Rechnung getragen, daß für den Fahrer, wenn er die Kurve ca. zur Hälfte durchfahren hat und beginnt das Lenkrand in die Nullgradstellung zurückzuschwenken, um in den nicht gekrümmten Fahrbahnverlauf einzufahren, möglichst schnell wieder eine in Fahrzeuglängsrichtung vor dem Fahrzeug liegende Lichtverteilung zur Ausleuchtung des nicht gekrümmten Fahrbahnverlaufs vorteilhaft ist. Dieses asymmetrische Verhalten wird in Figur 4 veranschaulicht.

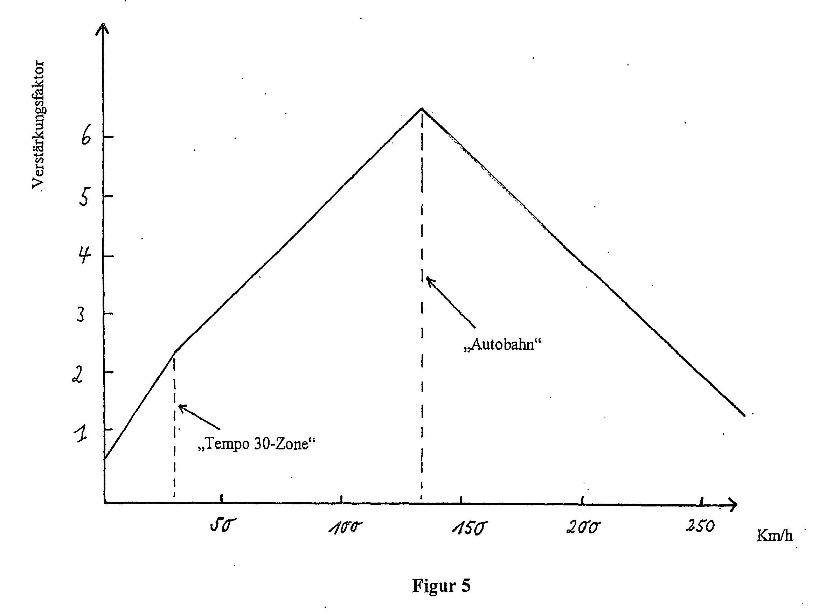

In Figur 5 ist der geschwindigkeitsabhängige Verlauf des Verstärkungsfaktors dargestellt. Hier sind ebenso wie bei der Filterzeitkonstanten unterschiedliche Geschwindigkeitsbereiche vorgesehen, in denen der Verstärkungsfaktor linear mit der Geschwindigkeit geändert wird, allerdings mit jeweils unterschiedlicher Steigung. Der Verstärkungsfaktor bestimmt den Endwert des Schwenkwinkels für einen gegebenen Radlenkwinkel, d.h. die Größe der Auslenkung der Lichtverteilung, während die Filterzeitkonstante die Dynamik bestimmt mit der die Verschwenkung erfolgt. Wie in dem Graphen aus Figur 5 zu erkennen ist, nimmt der Verstärkungsfaktor bis zur Erreichung einer Grenzgeschwindigkeit von 130km/h mit der Geschwindigkeit zu. Die Zunahme des Verstärkungsfaktors mit steigender Geschwindigkeit ist dadurch begründet, daß bei gleichem Kurvenradius (= gleicher Radlenkwinkel) bei höheren Geschwindigkeiten (Landstraße) der Fahrer vorausschauend wesentlich weiter in eine Kurve hineinschaut als bei niedrigen Geschwindigkeiten (Stadt, Wohngebiet).

Korrespondierend zum Verstärkungsfaktor steigt auch die Filterkonstante mit der Geschwindigkeit an. Gerade diese Kombination vermittelt dem Fahrer das Gefühl einer sicheren und physiologisch angenehmen schwenkbaren Lichtverteilung.

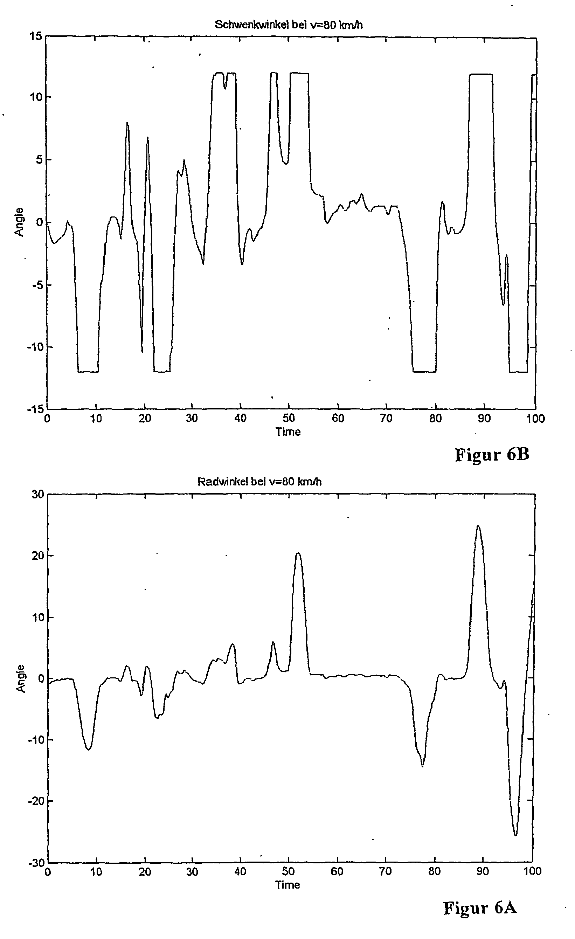

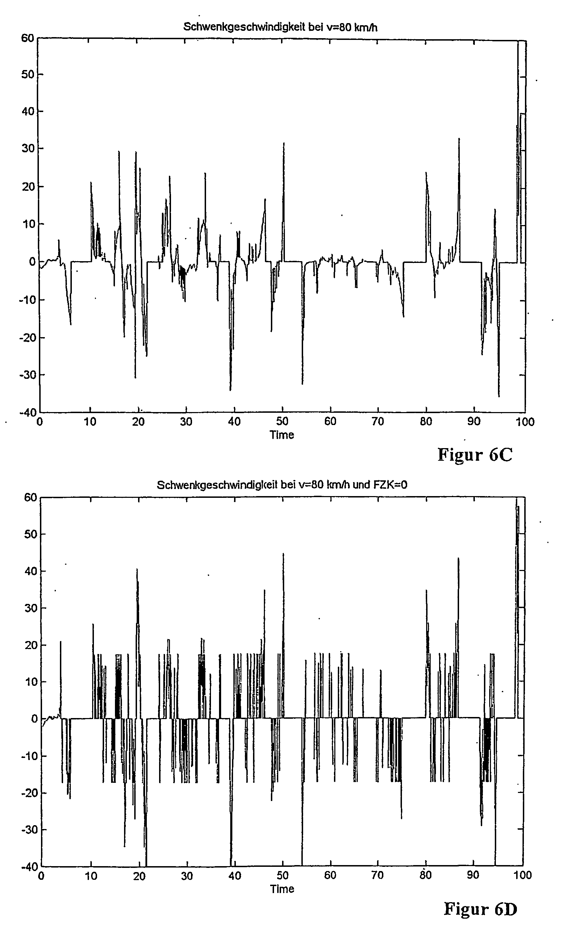

Figur 6 A zeigt den Verlauf für das Radlenkwinkelsignal bei einer Geschwindigkeit von v =80km/h über einen Zeitraum von 100 Sekunden. Figur 6B zeigt das erfindungsgemäß ermittelte geglättete und verstärkte Schwenkwinkelsignal als Antwort auf den zeitlichen Verlauf des Radlenkwinkelsignals. Dabei ist der maximal mögliche Schwenkwinkel im dargestellten Beispiel aus konstruktiven Gründen auf ± 12° beschränkt. Zur Verdeutlichung der vorteilhaften Wirkung der erfindungsgemäßen Glättung ist in Figur 6C die Schwenkwinkelgeschwindigkeit (1. zeitliche Ableitung des Schwenkwinkels) bei Aktivierung einer Filterzeitkonstanten von 0,7 Sekunden dargestellt, während in Figur 6D die Schwenkwinkelgeschwindigkeit (1. zeitliche Ableitung des Schwenkwinkels) mit einer Filterzeitkonstanten von Null (ungedämpft) dargestellt ist. Wie deutlich zu erkennen ist, zeigt das nicht geglättete Signal wesentlich mehr Schwankungen, die sowohl vom Fahrer als auch vom Gegenverkehr als störend und physiologisch unangenehm empfunden werden.

## Patentansprüche (Patentansprüche für folgende(n) Vertragsstaat(en): ES, IT, SE)

1. System zur Ansteuerung einer Fahrzeugbeleuchtungseinrichtung
- mit einem Mittel zum Verschwenken des von der Beleuchtungseinrichtung ausgeleuchteten Bereichs relativ zur einer Referenzrichtung,
- mit einem Mittel zur Bestimmung des Radlenkwinkels,
- mit einem Fahrgeschwindigkeitssensor,
wobei der Sollwert für den Schwenkwinkel in Abhängigkeit vom Radlenkwinkel bestimmt wird,
wobei der Sollwert für den Schwenkwinkel in Abhängigkeit von der Fahrgeschwindigkeit bestimmt wird,
**dadurch gekennzeichnet, daß**
- eine Glättungseinheit zur zeitlichen Glättung des Radlenkwinkelsignals vorgesehen ist,
- die Glättung in Abhängigkeit von der Fahrgeschwindigkeit erfolgt,
- der Sollwert für den Schwenkwinkel in Abhängigkeit vom geglätteten Radlenkwinkelsignal bestimmt wird.

2. System nach Anspruch 1,
**dadurch gekennzeichnet, daß**
die Glättungseinheit einen computerimplementierten Filteralgorithmus mit mindestens einer Filterzeitkonstanten aufweist, wobei dem Filteralgorithmus als Eingangsgröße das Radlenkwinkelsignal zugeführt wird.

3. System nach Anspruch 1,
**dadurch gekennzeichnet, daß**
die Glättungseinheit eine elektrische Filterschaltung mit mindestens einer Filterzeitkonstanten aufweist, wobei der Filterschaltung als Eingangsgröße das Radlenkwinkelsignal zugeführt wird.

4. System nach einem der vorstehenden Ansprüche,
**dadurch gekennzeichnet, daß**
das Ausmaß der Glättung durch eine geschwindigkeitsabhängige Filterzeitkonstante (τ) bestimmt wird.

5. System nach Anspruch 4,
**dadurch gekennzeichnet, daß**
für mindestens zwei verschiedene Geschwindigkeitsbereiche unterschiedliche Filterzeitkonstanten vorgesehen sind.

6. System nach Anspruch 5,
**dadurch gekennzeichnet, daß**
die Filterzeitkonstante in mindestens einem Geschwindigkeitsbereich linear mit der Geschwindigkeit zunimmt.

7. System nach Anspruch 5 oder 6,
**dadurch gekennzeichnet, daß**
die Filterzeitkonstante sich bei Über- und/oder Unterschreitung einer Grenzgeschwindigkeit sprunghaft ändert.

8. System nach einem der Ansprüche 4 bis 7,
**dadurch gekennzeichnet, daß**
die Filterzeitkonstante in Abhängigkeit von der Lenkrichtung bestimmt wird, wobei die Filterzeitkonstante beim Rückschwenken des Radlenkradwinkels in eine Referenzposition sprunghaft erniedrigt wird.

9. System nach einem der vorstehenden Ansprüche,
**dadurch gekennzeichnet, daß**
das Radlenkwinkelsignal zur Bestimmung des Sollwertes für den Schwenkwinkel geschwindigkeitsabhängig verstärkt wird.

10. System nach Anspruch 9,
**dadurch gekennzeichnet, daß**
die Glättung zeitlich vor der Verstärkung erfolgt, so daß das geglättete Radlenkwinkelsignal verstärkt wird, wobei der Sollwert für den Schwenkwinkel dem geschwindigkeitsabhängig geglätteten und verstärkten Radlenkwinkelsignal entspricht.

## Patentansprüche (Patentansprüche für folgende(n) Vertragsstaat(en): DE, GB, FR)

1. System zur Ansteuerung einer Fahrzeugbeleüchtungseinrichtung
- mit einem Mittel zum Verschwenken des von der Beleuchtungseinrichtung ausgeleuchteten Bereichs relativ zur einer Referenzrichtung,
- mit einem Mittel zur Bestimmung des Radlenkwinkels,
- mit einem Fahrgeschwindigkeitssensor,
- wobei der Sollwert für den Schwenkwinkel in Abhängigkeit vom Radlenkwinkel bestimmt wird,
- wobei der Sollwert für den Schwenkwinkel in Abhängigkeit von der Fahrgeschwindigkeit bestimmt wird,
- wobei eine Glättungseinheit zur zeitlichen Glättung des Radlenkwinkelsignals vorgesehen ist,
- die Glättung in Abhängigkeit von der Fahrgeschwindigkeit erfolgt,
- der Sollwert für den Schwenkwinkel in Abhängigkeit vom geglätteten Radlenkwinkelsignal bestimmt wird,
**dadurch gekennzeichnet, dass**
- das Ausmaß der Glättung durch eine geschwindigkeitsabhängige Filterzeitkonstante (τ) bestimmt wird,
- die Filterzeitkonstante in Abhängigkeit von der Lenkrichtung bestimmt wird,
wobei die Filterzeitkonstante beim Rückschwenken des Radlenkradwinkels in eine Referenzposition sprunghaft erniedrigt wird.

2. System nach Anspruch 1,
**dadurch gekennzeichnet, daß**
die Glättungseinheit einen computerimplementierten Filteralgorithmus mit mindestens einer Filterzeitkonstanten aufweist, wobei dem Filteralgorithmus als Eingangsgröße das Radlenkwinkelsignal zugeführt wird.

3. System nach Anspruch 1,
**dadurch gekennzeichnet, daß**
die Glättungseinheit eine elektrische Filterschaltung mit mindestens einer Filterzeitkonstanten aufweist, wobei der Filterschaltung als Eingangsgröße das Radlenkwinkelsignal zugeführt wird.

4. System nach einem der vorstehenden Ansprüche,
**dadurch gekennzeichnet, daß**
für mindestens zwei verschiedene Geschwindigkeitsbereiche unterschiedliche Filterzeitkonstanten vorgesehen sind.

5. System nach Anspruch 4,
**dadurch gekennzeichnet, daß**
die Filterzeitkonstante in mindestens einem Geschwindigkeitsbereich linear mit der Geschwindigkeit zunimmt.

6. System nach Anspruch 4 oder 5,
**dadurch gekennzeichnet, daß**
die Filterzeitkonstante sich bei Über- und/oder Unterschreitung einer Grenzgeschwindigkeit sprunghaft ändert.

7. System nach einem der vorstehenden Ansprüche,
**dadurch gekennzeichnet, daß**
das Radlenkwinkelsignal zur Bestimmung des Sollwertes für den Schwenkwinkel geschwindigkeitsabhängig verstärkt wird.

8. System nach Anspruch 7,
**dadurch gekennzeichnet, daß**
die Glättung zeitlich vor der Verstärkung erfolgt, so daß das geglättete Radlenkwinkelsignal verstärkt wird, wobei der Sollwert für den Schwenkwinkel dem geschwindigkeitsabhängig geglätteten und verstärkten Radlenkwinkelsignal entspricht.

## Claims (Claims for the following Contracting State(s): ES, IT, SE)

1. System for controlling a lighting apparatus for vehicles
- comprising a means of moving the area illuminated by the lighting apparatus with reference to a reference direction,
- comprising a means of determining the wheel steering angle,
- comprising a vehicle speed sensor,
- where the nominal swivel angle is determined with reference to the wheel steering angle,
- where the nominal swivel angle is determined with reference to the vehicle speed,
- where a smoothing unit is provided for smoothing the wheel steering angle signal,
- smoothing depends on the driving speed,
- the nominal swivel angle is determined with reference to the smoothed wheel steering angle,
**characterized in that**
- a speed-dependent filter time constant (t) is used to determine the amount of smoothing,
- the filter time constant is determined with reference to the steering direction such that the filter time constant is quickly reduced when the wheel steering angle returns to a reference position.

2. System of claim 1,
**characterized in that**
the smoothing unit is based around a filtering algorithm implemented by a computer and comprising at least one filter time constant, wherein the wheel steering angle signal is used as the input variable for the filtering algorithm.

3. System of claim 1,
**characterized in that**
the smoothing unit is based around an electric filter circuit comprising at least one filter time constant, wherein the wheel steering angle signal is used as the input variable for the filter circuit.

4. System of one of the above claims,
**characterized in that**
different filter time constants are provided for at least two different speed ranges.

5. System of claim 4,
**characterized in that**
the filter time constant has a linear increase in parallel with the speed through at least one speed range.

6. System of claim 4 or 5,
**characterized in that**
the filter time constant changes erratically when the speed exceeds or falls below a limit.

7. System of one of the above claims,
**characterized in that**
the wheel steering angle signal used to determine the nominal swivel angle is amplified with reference to the speed.

8. System of claim 7,
**characterized in that**
smoothing precedes amplification in time such that the smoothed wheel steering angle signal is amplified using a nominal swivel angle equivalent to the wheel steering angle signal that was previously smoothed with reference to the speed and amplified.

## Claims (Claims for the following Contracting State(s): DE, GB, FR)

1. System for controlling a lighting apparatus for vehicles
- comprising a means of moving the area illuminated by the lighting apparatus with reference to a reference direction,
- comprising a means of determining the wheel steering angle,
- comprising a vehicle speed sensor,
where the nominal swivel angle is determined with reference to the wheel steering angle,
where the nominal swivel angle is determined with reference to the vehicle speed,
**characterized in that**
- a smoothing unit is provided for smoothing the wheel steering angle signal,
- smoothing depends on the driving speed,
- the nominal swivel angle is determined with reference to the smoothed wheel steering angle signal.

2. System of claim 1,
**characterized in that**
the smoothing unit is based around a filtering algorithm implemented by a computer and comprising at least one filter time constant, wherein the wheel steering angle signal is used as the input variable for the filtering algorithm.

3. System of claim 1,
**characterized in that**
the smoothing unit is based around an electric filter circuit comprising at least one filter time constant, wherein the wheel steering angle signal is used as the input variable for the filter circuit.

4. System of one of the above claims,
**characterized in that**
a speed-dependent filter time constant (τ) is used to determine the amount of smoothing,

5. System of claim 4,
**characterized in that**
different filter time constants are provided for at least two different speed ranges.

6. System of claim 5,
**characterized in that**
the filter time constant has a linear increase parallel with the speed through at least one speed range.

7. System of claim 5 or 6,
**characterized in that**
the filter time constant changes erratically when the speed exceeds or falls below a limit.

8. System of claims 4 to 7,
**characterized in that**
the filter time constant is determined with reference to the steering direction such that the filter time constant is quickly reduced when the wheel steering angle returns to a reference position.

9. System of one of the above claims,
**characterized in that**
the wheel steering angle signal used to determine the nominal swivel angle is amplified with reference to the speed.

10. System of claim 9,
**characterized in that**
smoothing precedes amplification in time such that the smoothed wheel steering angle signal is amplified using a nominal swivel angle equivalent to the wheel steering angle signal that was previously smoothed with reference to the speed and amplified.

## Revendications (Revendications pour l'(les) Etat(s) contractant(s) suivant(s): ES, IT, SE)

1. Système de commande d'un dispositif d'éclairage d'un véhicule comprenant :
- un moyen de pivotement de la zone éclairée par le dispositif d'éclairage, par rapport à une direction de référence,
- un moyen de détermination de l'angle de braquage de roues,
- un capteur de vitesse de roulage,
- la valeur de consigne pour l'angle de pivotement étant déterminée en fonction de l'angle de braquage de roues,
- la valeur de consigne pour l'angle de pivotement étant déterminée en fonction de la vitesse de roulage,
- une unité de lissage étant prévue pour le lissage temporel du signal d'angle de braquage de roues,
- le lissage se produit en fonction de la vitesse de roulage,
- la valeur de consigne pour l'angle de pivotement est déterminée en fonction du signal d'angle de braquage de roues lissé,
**caractérisé en ce que**
- le niveau du lissage est déterminé par une constante de temps (τ) de filtre, en fonction de la vitesse,
- la constante de temps de filtre est déterminée en fonction de la direction de braquage, la constante de temps de filtre étant abaissée brusquement dans une position de référence, au cours du pivotement en retour de l'angle de braquage de roues.

2. Système selon la revendication 1, **caractérisé en ce que** l'unité de lissage présente un algorithme de filtre mis en oeuvre par ordinateur, comprenant au moins une constante de temps de filtre, le signal d'angle de braquage de roues étant fourni à l'algorithme de filtre, comme une grandeur d'entrée.

3. Système selon la revendication 1, **caractérisé en ce que** l'unité de lissage présente un circuit de filtre électrique comprenant au moins une constante de temps de filtre, le signal de braquage de roues étant fourni au circuit de filtre, comme grandeur d'entrée.

4. Système selon l'une quelconque des revendications précédentes, **caractérisé en ce qu'**il est prévu des constantes de temps de filtre variables pour au moins deux plages de vitesse différentes.

5. Système selon la revendication 4, **caractérisé en ce que** la constante de temps de filtre augmente avec la vitesse, de façon linéaire, dans au moins une plage de vitesse.

6. Système selon la revendication 4 ou 5, **caractérisé en ce que** la constante de temps de filtre se modifie brusquement en cas de dépassement de la valeur supérieure et / ou inférieure d'une vitesse limite.

7. Système selon l'une quelconque des revendications précédentes, **caractérisé en ce que** le signal d'angle de braquage de roues servant à la détermination de la valeur de consigne pour l'angle de pivotement est renforcé en fonction de la vitesse.

8. Système selon la revendication 7, **caractérisé en ce que** le lissage se produit, dans le temps, avant le renforcement, de sorte que le signal d'angle de braquage de roues lissé est renforcé, la valeur de consigne pour l'angle de pivotement correspondant au signal d'angle de braquage de roues lissé en fonction de la vitesse et renforcé.

## Revendications (Revendications pour l'(les) Etat(s) contractant(s) suivant(s): DE, GB, FR)

1. Système de commande d'un dispositif d'éclairage d'un véhicule comprenant :
- un moyen de pivotement de la zone éclairée par le dispositif d'éclairage, par rapport à une direction de référence,
- un moyen de détermination de l'angle de braquage de roues,
- un capteur de vitesse de roulage,
la valeur de consigne pour l'angle de pivotement étant déterminée en fonction de l'angle de braquage de roues,
la valeur de consigne pour l'angle de pivotement étant déterminée en fonction de la vitesse de roulage,
**caractérisé en ce que**
- une unité de lissage étant prévue pour le lissage temporel du signal d'angle de braquage de roues,
- le lissage se produit en fonction de la vitesse de roulage,
- la valeur de consigne pour l'angle de pivotement est déterminée en fonction du signal d'angle de braquage de roues lissé,

2. Système selon la revendication 1, **caractérisé en ce que** l'unité de lissage présente un algorithme de filtre mis en oeuvre par ordinateur, comprenant au moins une constante de temps de filtre, le signal d'angle de braquage de roues étant fourni à l'algorithme de filtre, comme une grandeur d'entrée.

3. Système selon la revendication 1, **caractérisé en ce que** l'unité de lissage présente un circuit de filtre électrique comprenant au moins une constante de temps de filtre, le signal de braquage de roues étant fourni au circuit de filtre, comme grandeur d'entrée.

4. Système selon l'une quelconque des revendications précédentes, **caractérisé en ce** l'importance du lissage est déterminée par une constante de temps de filtre (τ) dépendante de la vitesse.

5. Système selon la revendication 4, **caractérisé en ce qu'**il est prévu des constantes de temps de filtre variables pour au moins deux plages de vitesse différentes.

6. Système selon la revendication 5, **caractérisé en ce que** la constante de temps de filtre augmente avec la vitesse, de façon linéaire, dans au moins une plage de vitesse.

7. Système selon la revendication 5 ou 6, **caractérisé en ce que** la constante de temps de filtre se modifie brusquement en cas de dépassement de la valeur supérieure et / ou inférieure d'une vitesse limite.

8. Système selon la revendication 4 à 7, **caractérisé en ce que** la constante de temps de filtre est définie suivant le sens de braquage, la constante de temps de filtre étant réduite d'un seul coup dans une position de référence lors du retour en position de l'angle de braquage des roues.

9. Système selon l'une quelconque des revendications précédentes, **caractérisé en ce que** le signal d'angle de braquage de roues servant à la détermination de la valeur de consigne pour l'angle de pivotement est renforcé en fonction de la vitesse.

10. Système selon la revendication 9, **caractérisé en ce que** le lissage se produit, dans le temps, avant le renforcement, de sorte que le signal d'angle de braquage de roues lissé est renforcé, la valeur de consigne pour l'angle de pivotement correspondant au signal d'angle de braquage de roues lissé en fonction de la vitesse et renforcé.
